# FASCICULE DE BREVET EUROPEEN

(11) **EP 2 547 555 B1**
(45) Date de publication et mention de la délivrance du brevet: **30.05.2018**
(21) Numéro de dépôt: 11715573.9
(22) Date de dépôt: 11.03.2011
(51) Int. Cl.: B60R 16/02

(54) **ARCHITECTURE ELECTRIQUE POUR COMMUTATEUR DE VEHICULE AUTOMOBILE**
ELEKTRISCHE SCHALTUNG FÜR EINEN KRAFTFAHRZEUG SCHALTER
ELECTRIC CIRCUIT FOR A VEHICLE SWITCH

(30) Priorité: 16.03.2010 FR 1001051
(43) Date de publication de la demande: 23.01.2013
(73) Titulaire: SC2N, 94046 Creteil Cedex (FR)
(72) Inventeur: HALLET, Michel, 14320 Clinchamps sur Orne (FR)
(74) Mandataire: Pothmann, Karsten
(86) Numéro de dépôt international: PCT/FR2011/000129
(87) Numéro de publication internationale: WO 2011/114014

(56) Documents cités:
- EP-A2- 0 147 110
- WO-A1-2007/028887
- US-A- 5 486 817
- US-A- 5 956 247
- US-A1- 2004 217 649

## Description

L'invention concerne une architecture électrique pour commutateur de véhicule automobile permettant, par exemple, la commande d'un poste radio. Plus particulièrement, l'invention concerne une architecture électrique à diodes par câblage pour commutateur de véhicule automobile. Une telle architecture est décrite dans US 5 486 817 selon le préambule de la revendication 1. Les architectures mises en oeuvre au sein des véhicules automobiles, particulièrement pour la commande d'un poste radio, peuvent être réalisées de différentes manières.

Un premier type d'architecture concernent des architectures de type matrice. Une telle architecture comporte par exemple, trois entrées et trois sorties reliées à un microprocesseur.

Chaque entrée coupe chaque sortie. De façon générale, des systèmes de contactage sont implantés à la jonction de chaque entrée et sortie. En fonction de l'activation des systèmes de contactage, une liaison électrique est crée entre une entrée et une sortie du microprocesseur. Ainsi, lorsque le microprocesseur émet un courant électrique via une sortie déterminée, ce dernier détecte sur l'entrée reliée à la sortie déterminée, une information permettant d'en déduire une fonction d'activation.

A titre d'exemple, dans une architecture de type matrice comportant une première, une deuxième et une troisième entrées ainsi qu'une première, une deuxième et une troisième sorties, lorsque le microprocesseur émet un signal électrique sur :
- la première sortie et reçoit une information sur la première entrée, ce dernier en déduit une première fonction d'activation ;
- Ja première sortie et reçoit une information sur la deuxième entrée, ce dernier en déduit une deuxième fonction d'activation ;
- la première sortie et reçoit une information sur la troisième entrée, ce dernier en déduit une troisième fonction d'activation ;
- la deuxième sortie et reçoit une information sur la première entrée, ce dernier en déduit une quatrième fonction d'activation. En conséquence, dans une architecture de type matrice munie de trois entrées et de trois sorties, neuf informations correspondant par exemple à neuf commandes peuvent être traitées par le microprocesseur. Trois fils d'entrée et trois fils de sortie sont nécessaires pour obtenir au maximum neuf informations.

Pour faciliter la mise en oeuvre des postes radio au sein de tout type de véhicule, l'interface de connexion des postes radio est standardisée et peut recevoir cinq fils au maximum. De ce fait, lorsqu'un commutateur servant à piloter les fonctions d'un poste radio est équipé d'une architecture de type matrice, les fonctions pilotables au moyen du commutateur sont limitées à six. En effet, selon une telle architecture, pour interpréter six fonctions, deux fils de sortie et trois fils d'entrée doivent être utilisés ou inversement.

Un deuxième type d'architecture concernent des architectures de type fil à fil au sein desquelles des fils en provenance d'un commutateur sont reliés à une interface électronique qui peut être un microprocesseur intermédiaire apte à traiter des informations émises par le commutateur ou un autre élément transformant des informations de type fil à fil en informations codées Ces informations sont ensuite transmises, via une liaison CAN, LIN ou autre, du microprocesseur intermédiaire au microprocesseur que comporte la radio. Ce type d'architectures fil à fil nécessite par conséquent l'utilisation d'un élément hardware (microprocesseur intermédiaire) spécifique. Un volume interne important dans la commande est donc nécessaire pour la mise en oeuvre des architectures de type fil à fil.

Un troisième type d'architecture concernent des architectures de type niveau de tension. A titre d'exemple, trois résistances peuvent être montées en parallèle, en série ou encore de façon combinée (parallèle et série) :
- un premier fil comportant une résistance ;
- un deuxième fil comportant une résistance et un premier interrupteur ;
- un troisième fil comportant une résistance et un deuxième interrupteur.

Le premier interrupteur et le deuxième interrupteur sont actionnés au moyen d'un commutateur de commande. Une tension initiale est mesurée aux bornes des trois résistances par le microprocesseur de la radio. Cette tension initiale varie en fonction de l'ouverture et de la fermeture des interrupteurs. Le microprocesseur détecte cette variation de tension et interprète la tension mesurée comme correspondant à une commande. Cette mise en oeuvre offre la possibilité de faire circuler une pluralité d'informations sur une unique entrée du microprocesseur. Néanmoins, un inconvénient réside dans le fait que la détérioration d'un des interrupteurs ou une mauvaise fermeture des contacts d'un des interrupteurs agit sur la tension. De ce fait, la tension mesurée peut différer de la tension attendue correspondant à une commande spécifique et entraîner la commande d'une fonction non souhaitée par l'utilisateur.

Dans ce contexte, l'invention vise à proposer une architecture électrique pour commutateur de véhicule automobile permettant de réduire le nombre de fils des architectures de l'art antérieur tout en assurant une sureté de fonctionnement optimum.

A cette fin, l'invention porte sur une architecture électrique pour commutateur de véhicule automobile selon la revendication 1. Grâce à l'invention, deux sorties de microprocesseur suffisent pour traiter trois commandes. Cette particularité est assurée par le fait que la troisième commande est reliée d'une part, à la première sortie et d'autre part, à la deuxième sortie du microprocesseur.

En outre, la première diode et la deuxième diode permettent de limiter les parasites pouvant être générés par la première liaison filaire directe sur la deuxième liaison filaire directe et/ou par la deuxième liaison filaire directe sur la première liaison filaire directe.

Outre les caractéristiques principales qui viennent d'êtres mentionnées dans le paragraphe précédent, l'architecture électrique pour commutateur de véhicule automobile selon l'invention peut présenter une ou plusieurs caractéristiques supplémentaires ci-dessous, considérées individuellement ou selon toutes les combinaisons techniquement réalisables :
- ladite première liaison filaire directe comporte un premier interrupteur, ladite deuxième liaison filaire directe comporte un deuxième interrupteur et ladite première liaison filaire indirecte comporte un troisième interrupteur, ledit troisième interrupteur étant disposé sur ladite première partie de ladite première liaison filaire indirecte ;
- ladite architecture comporte :
   - une quatrième commande reliée par une deuxième liaison filaire indirecte d'une part, à ladite deuxième sortie dudit microprocesseur via une troisième diode et d'autre part, à une troisième sortie dudit microprocesseur via une quatrième diode, ladite troisième diode et ladite quatrième diode étant reliées au niveau d'un deuxième noeud électrique, ladite deuxième liaison filaire indirecte comportant un quatrième interrupteur reliant ladite quatrième commande au dit deuxième noeud électrique ;

   - une cinquième commande reliée par une troisième liaison filaire directe, munie d'un cinquième interrupteur, à ladite troisième sortie dudit microprocesseur ;
   - une sixième commande reliée par une troisième liaison filaire indirecte d'une part, à ladite troisième sortie dudit microprocesseur via une cinquième diode et d'autre part, à une quatrième sortie dudit microprocesseur via une sixième diode, ladite cinquième diode et ladite sixième diode étant reliées au niveau d'un troisième noeud électrique, ladite troisième liaison filaire indirecte comportant un sixième interrupteur reliant ladite sixième commande au dit troisième noeud électrique ;
   - une septième commande reliée par une quatrième liaison filaire directe, munie d'un septième interrupteur, à ladite quatrième sortie dudit microprocesseur ;
- ledit microprocesseur est apte à émettre via ladite première sortie, ladite deuxième sortie, ladite troisième sortie et ladite quatrième sortie des impulsions de courant électrique, dont la tension est déterminée, sur ladite première liaison filaire directe, ladite deuxième liaison filaire directe, ladite troisième liaison filaire directe, ladite quatrième liaison filaire directe, ladite première liaison filaire indirecte, ladite deuxième liaison filaire indirecte et ladite troisième liaison filaire indirecte ;
- une mesure de ladite tension de chaque impulsion de courant électrique émise sur ladite première liaison filaire directe, ladite deuxième liaison filaire directe, ladite troisième liaison filaire directe, ladite quatrième liaison filaire directe, ladite première liaison filaire indirecte, ladite deuxième liaison filaire indirecte et ladite troisième liaison filaire indirecte est effectuée de façon périodique ;
- ladite période est de quelques microsecondes ou millisecondes, ladite période étant typiquement de l'ordre de 3 ms ;
- ladite tension déterminée de ladite impulsion de courant électrique émise sur :
   - ladite première liaison filaire, directe varie lorsque ledit premier interrupteur passe d'un état de commutation ouvert à un état de commutation fermé ;
   - ladite deuxième liaison filaire directe varie lorsque ledit deuxième interrupteur passe d'un état de commutation ouvert à un état de commutation fermé ;
   - ladite troisième liaison filaire directe varie lorsque ledit cinquième interrupteur passe d'un état de commutation ouvert à un état de commutation fermé ;
   - ladite quatrième liaison filaire directe varie lorsque ledit septième interrupteur passe d'un état de commutation ouvert à un état de commutation fermé ;
   - ladite première liaison filaire indirecte varie lorsque ledit troisième interrupteur passe d'un état de commutation ouvert à un état de commutation fermé ;
   - ladite deuxième liaison filaire indirecte varie lorsque ledit quatrième interrupteur passe d'un état de commutation ouvert à un état de commutation fermé ;
   - ladite troisième liaison filaire indirecte varie lorsque ledit sixième interrupteur passe d'un état de commutation ouvert à un état de commutation fermé ;
- lorsque ladite tension mesurée se situe :
   - au delà d'une valeur seuil déterminée, une information est générée pour ledit microprocesseur ;
   - en deçà de ladite valeur seuil déterminée, une information est générée pour ledit microprocesseur ;
- ladite information est une information numérique ou une information analogique ;
- ledit microprocesseur est apte à recevoir une information relative à un état de commutation de chacun desdits premier interrupteur, deuxième interrupteur, troisième interrupteur, quatrième interrupteur, cinquième interrupteur, sixième interrupteur, et/ou septième interrupteur, lesdites informations étant combinées entre elles de façon à obtenir une table d'information.

L'invention porte en outre sur un commutateur de véhicule automobile comportant une architecture électrique conforme à l'invention.

D'autres caractéristiques et avantages de l'invention ressortiront clairement de la description qui en est donnée ci-après, à titre indicatif et nullement limitatif, en référence aux figures annexées ci-jointes parmi lesquelles :
- la figure 1 représente un exemple d'architecture électrique conforme à l'invention ;
- la figure 2 représente un exemple d'architecture électrique selon l'invention utilisée pour la commande de fonctions d'une radio.

Pour des raisons de clarté, seuls les éléments utiles pour la compréhension de l'invention ont été représentés, et ceci sans respect de l'échelle et de manière schématique.

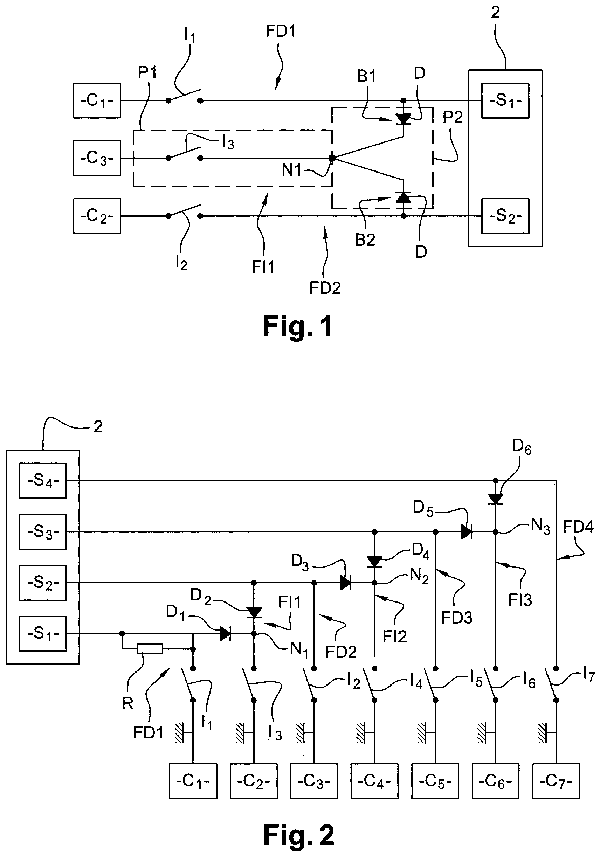

La figure 1 représente une architecture électrique 1 pour commutateur de véhicule automobile conforme à l'invention comportant :
- une première commande C1, une deuxième commande C2 et une troisième commande C3 ;
- un premier interrupteur I1, un deuxième interrupteur I2 et un troisième interrupteur I3 ;
- un microprocesseur 2 ;
- une première sortie S1 et une deuxième sortie S2 du microprocesseur 2 ;
- une première liaison filaire directe FD1 et une deuxième liaison filaire directe FD2 ;
- une première liaison filaire indirecte FI1 comportant une première partie P1 et une deuxième partie P2 reliées entre elles par un premier noeud électrique N1, la deuxième partie P2 comportant une première branche B1 et une deuxième branche B2 ;
- une première diode D1 et une deuxième diode D2.

De façon non limitative, on désigne par liaison filaire, un câble électrique ou un fil électrique.

De façon non limitative, on entend par commande, la commande d'un dispositif électrique comme par exemple, la commande d'une radio d'un véhicule automobile ou encore la commande d'un siège réglable d'un véhicule automobile.

La première commande C1 est reliée au moyen de la première liaison filaire directe FD1 à la première sortie S1 du microprocesseur 2. La première liaison filaire directe FD1 comporte le premier interrupteur I1.

La deuxième commande C2 est reliée au moyen de la deuxième liaison filaire directe FD2 à la deuxième sortie S2 du microprocesseur 2. La deuxième liaison filaire directe FD2 comporte le deuxième interrupteur I2.

La troisième commande C3 est reliée au moyen de la première liaison filaire indirecte FI1 à la première sortie S1 et à la deuxième sortie S2 du microprocesseur 2. La première partie P1 est reliée entre la troisième commande C3 et le premier noeud électrique N1. La première branche B1 de la deuxième partie P2 est reliée à la première sortie S1 du microprocesseur 2 et la deuxième branche B2 de la deuxième partie P2 est reliée à la deuxième sortie S2 du microprocesseur 2.

La première diode D1 et la deuxième diode D2 sont positionnées respectivement sur la première branche B1 et sur la deuxième branche B2. La première diode D1 et la deuxième diode D2 sont orientées de sorte qu'un courant électrique puisse circuler de la première sortie S1 vers la troisième commande C3 et de la deuxième sortie S2 vers la troisième commande C3. A contrario, l'orientation de la première diode D1 et de la deuxième diode D2 interdit à un quelconque courant électrique de circuler de la première sortie S1 vers la deuxième sortie S2 ou de la deuxième sortie S2 vers la première sortie S1.

En conformité avec une telle architecture, le microprocesseur 2 transmet des impulsions de courant électrique selon une période déterminée. Cette dernière est de préférence de l'ordre de quelques microsecondes ou millisecondes.

A titre d'exemple, lorsqu'on déclenche la première commande C1, le premier interrupteur I1 se ferme puis une information relative à la fermeture du premier interrupteur I1 est transmise au microprocesseur 2. Plus particulièrement, cette information est formée par la mesure de tension du courant électrique transmis par le microprocesseur 2 via la première sortie S1. En effet, lorsque le premier interrupteur I1 se ferme, la tension du courant électrique transmis par le microprocesseur 2 via la première sortie S1 diminue. La détection de cette diminution est traitée par le microprocesseur 2 en codage binaire.

Lorsque la tension se situe au delà d'une valeur seuil, une information binaire « 1 » est générée pour le microprocesseur 2 et lorsque la tension se situe en deçà de la valeur seuil, une information binaire « 0 » est générée pour le microprocesseur 2. En d'autres termes, lorsque l'interrupteur est fermé, le codage binaire correspondant est « 1 » et lorsque l'interrupteur est ouvert, le codage binaire correspondant est « 0 ». Il est entendu que le codage peut être inversé, à savoir « 0 » lorsque l'interrupteur est fermé et « 1 » lorsque l'interrupteur est ouvert.

De façon similaire, lorsqu'on déclenche la deuxième commande C2, le deuxième interrupteur I2 se ferme puis une information relative à la fermeture du deuxième interrupteur I2 est transmise au microprocesseur 2. Plus particulièrement, cette information est formée par la mesure de tension du courant électrique transmis par le microprocesseur 2 via la deuxième sortie S2. En effet, lorsque le deuxième interrupteur I2 se ferme, la tension du courant électrique transmis par le microprocesseur 2 via la deuxième sortie S2 diminue. La détection de cette diminution est traitée par le microprocesseur 2 en codage binaire.

En revanche, lorsqu'on déclenche la troisième commande C3, le troisième interrupteur I3 se ferme et deux informations sont transmises en parallèle au microprocesseur 2. Ce dernier traite ces informations comme deux informations binaires, à savoir « 0,0 ».

De façon non limitative, la première liaison filaire directe FD1 et la deuxième liaison filaire directe FD2 ainsi que la première liaison filaire indirecte FI1 sont reliées à une extrémité au microprocesseur 2. A l'extrémité opposée ces dernières sont reliées à la masse.

Lorsqu'aucun des premier, deuxième ou troisième interrupteurs I1, I2 et I3 n'est fermé, le codage binaire traité par le microprocesseur 2 comporte uniquement des 1. Puis, dès lors qu'un des premier, deuxième ou troisième interrupteurs I1, I2 et I3 est fermé le codage correspondant passe de 1 à 0.

De façon générale, les informations que reçoit le microprocesseur 2 sont codées en langage binaire 0 ou 1. Ainsi pour une première commande C1 reliée à la première sortie S1, une deuxième commande C2 reliée à la deuxième sortie S2 et une troisième commande C3 reliée à la première sortie S1 et à la deuxième sortie S2 on obtient une table d'information, formée par des informations de type binaire, par exemple, lorsque :
- le premier interrupteur I1 est fermé:

| | C1 | C2 | C3 | | |
|---|---|---|---|---|---|
| S1 | 0 | 1 | 1 | → | 01 |
| S2 | 1 | 1 | 1 | | |

- le deuxième interrupteur I2 est fermé :

| | C1 | C2 | C3 | | |
|---|---|---|---|---|---|
| S1 | 1 | 1 | 1 | → | 10 |
| S2 | 1 | 0 | 1 | | |

- le premier interrupteur I1 et le deuxième interrupteur I2 sont fermés :

| | C1 | C2 | C3 | | |
|---|---|---|---|---|---|
| S1 | 0 | 1 | 1 | → | 11 |
| S2 | 1 | 0 | 1 | | |

- le troisième interrupteur I3 est fermé :

| | C1 | C2 | C3 | | |
|---|---|---|---|---|---|
| S1 | 1 | 1 | 0 | → | 11 |
| S2 | 1 | 1 | 0 | | |

Il convient de noter que lorsque le premier interrupteur I1 et le deuxième interrupteur I2 sont fermés respectivement au moyen de la première commande C1 et de la deuxième commande C2, le codage binaire traité par le microprocesseur 2 est semblable au codage binaire correspondant à la fermeture du troisième interrupteur I3 au moyen de la troisième commande C3.

De façon à différencier ces deux possibilités de mises en oeuvre, le microprocesseur 2 détecte, par exemple, toutes les 3 ms les informations reçues. Ainsi, si un décalage d'au moins 3 ms est présent lors du déclenchement de la première commande C1 et de la deuxième commande C2, le microprocesseur 2 interprète ce décalage temporel et en déduit que la première commande C1 et la deuxième commande C2 ont été demandées en parallèle.

En outre, dans l'hypothèse selon laquelle le microprocesseur ne peut pas déterminer la commande ou les commandes souhaitée(s) :
- Il analyse les situations précédentes qui ont été mémorisées de façon à pouvoir déterminer la situation demandée ;
- Il ne valide aucune fonction ;
- Il valide une fonction de risque minimum. A titre d'exemple, en cas de doute, le microprocesseur préférera diminuer le son que l'augmenter.

On pourra noter également que les informations traitées par le microprocesseur peuvent être de typa analogique. Par exemple, lorsque la tension mesurée est comprise entre 4 et 5 V cela traduit une ouverture de l'interrupteur correspondant et lorsque la tension mesurée est comprise entre 0 et 1V, cela traduit une fermeture de l'interrupteur correspondant.

La figure 2 illustre une architecture électrique pour commutateur sous volant de véhicule automobile conforme à l'invention équipant un commutateur (non représenté) de commande d'une radio.

Le commutateur comporte :
- une première commande C1 reliée par une première liaison filaire directe FD1 à une première sortie S1 d'un microprocesseur 2 ;
- une deuxième commande C2 reliée par une première liaison filaire indirecte FI1 d'une part, à la première sortie S1 du microprocesseur 2 via une première diode D1 et d'autre part, à une deuxième sortie S2 du microprocesseur 2 via une deuxième diode D2, la première diode D1 et la deuxième diode D2 étant reliées au niveau d'un premier noeud électrique N1 ;

- une troisième commande C3 reliée par une deuxième liaison filaire directe FD2 à la deuxième sortie S2 du microprocesseur 2 ;
- une quatrième commande C4 reliée par une deuxième liaison filaire indirecte FI2 d'une part, à la deuxième sortie S2 du microprocesseur 2 via une troisième diode D3 et d'autre part, à une troisième sortie S3 du microprocesseur 2 via une quatrième diode D4, la troisième diode D3 et la quatrième diode D4 étant reliées au niveau d'un deuxième noeud électrique N2 ;
- une cinquième commande C5 reliée par une troisième liaison filaire directe FD3 à la troisième sortie S3 du microprocesseur 2 ;
- une sixième commande C6 reliée par une troisième liaison filaire indirecte FI3 d'une part, à la troisième sortie S3 du microprocesseur 2 via une cinquième diode D5 et d'autre part, à une quatrième sortie S4 du microprocesseur 2 via une sixième diode D6, la cinquième diode D5 et la sixième diode D6 étant reliées au niveau d'un troisième noeud électrique N3 ;
- une septième commande C7 reliée par une quatrième liaison filaire directe FD4 à la quatrième sortie S4 du microprocesseur 2 ;
- une résistance R reliée à la première sortie S1 du microprocesseur 2.

De façon générale, la structure des première, deuxième et troisième liaisons filaires indirectes FI1, FI2 et F3 est similaire à la structure de la première liaison filaire indirecte FI1 décrite auparavant à l'appui de la figure 1.

De surcroît il convient de noter que :
- la première diode D1 est orientée de telle sorte qu'aucun courant électrique ne puisse circuler du premier noeud électrique N1 vers la première sortie S1 ;
- la deuxième diode D2 est orientée de telle sorte qu'aucun courant électrique ne puisse circuler du premier noeud électrique N1 vers la deuxième sortie S2 ;
- la troisième diode D3 est orientée de telle sorte qu'aucun courant électrique ne puisse circuler du deuxième noeud électrique N2 vers la deuxième sortie S2 ;
- la quatrième diode D4 est orientée de telle sorte qu'aucun courant électrique ne puisse circuler du deuxième noeud électrique N2 vers la troisième sortie S3 ;
- la cinquième diode D5 est orientée de telle sorte qu'aucun courant électrique ne puisse circuler du troisième noeud électrique N3 vers la troisième sortie S3 ;
- la sixième diode D6 est orientée de telle sorte qu'aucun courant électrique ne puisse circuler du troisième noeud électrique N3 vers la quatrième sortie S4.

En outre, similairement à la mise en oeuvre représentée sur la figure 1 :
- la première liaison filaire directe FD1 comporte un premier interrupteur I1 ;
- la première liaison filaire indirecte FI1 comporte un troisième interrupteur I3 ;
- la deuxième liaison filaire directe FD2 comporte un deuxième interrupteur I2 ;
- la deuxième liaison filaire indirecte FI2 comporte un quatrième interrupteur I4 ;
- la troisième liaison filaire directe FD3 comporte un cinquième interrupteur I5 ;
- la troisième liaison filaire indirecte FI3 comporte un sixième interrupteur I6 ;
- la quatrième liaison filaire directe FD4 comporte un septième interrupteur I7.

Ainsi, si un conducteur actionne la quatrième commande C4 du commutateur, alors le quatrième interrupteur I4 se ferme et le microprocesseur 2 reçoit une information reflétant une diminution de la tension du courant électrique. Selon cette hypothèse, la table d'information correspondante est la suivante :

| | C1 | C2 | C3 | C4 | C5 | C6 | C7 | | |
|---|---|---|---|---|---|---|---|---|---|
| S4 | 1 | 1 | 1 | 1 | 1 | 1 | 1 | | |
| S3 | 1 | 1 | 1 | 0 | 1 | 1 | 1 | → | 1001 |
| S2 | 1 | 1 | 1 | 0 | 1 | 1 | 1 | | |
| S1 | 1 | 1 | 1 | 1 | 1 | 1 | 1 | | |

Dans cet exemple, le microprocesseur 2 reçoit une information représentant d'une part, une diminution de tension du courant émis par le microprocesseur 2 via la deuxième sortie S2 et d'autre part, une diminution de tension du courant émis par le microprocesseur 2 via la troisième sortie S3. La combinaison de ces deux informations binaires forme une information numérique (ou codage numérique) - 1001 - correspondant à la commande souhaitée par le conducteur, autrement dit la commande C4.

En outre, la résistance R permet au microprocesseur 2 de déterminer si le commutateur (non représenté) est connecté au microprocesseur 2. En effet, lorsque le microprocesseur 2 transmet un courant électrique sur la première liaison filaire directe FD1 et que le commutateur est connecté à ce dernier, le microprocesseur 2 détecte une modification de la tension du courant électrique. Cette modification de courant est due à la présence de la résistance R.

Avantageusement, l'architecture électrique 1 représentée sur la figure 2 offre ainsi la possibilité de commander sept fonctions pour un microprocesseur 2 d'autoradio comportant cinq sorties.

Le nombre de commandes que comporte une architecture électrique 1 conforme à l'invention n'est pas limité.

Par ailleurs, l'invention a été plus particulièrement décrite dans le cas d'un commutateur de commande d'une radio sous volant d'un véhicule automobile. Toutefois, il peut être également souhaitable d'appliquer la même architecture électrique à tout type de commande électrique.

Par ailleurs, comparativement aux architectures de type fil à fil et de type niveau de tension, l'architecture électrique 1 a notamment pour avantage de diminuer le nombre de fils et de sécuriser le fonctionnement.

L'invention est décrite dans ce qui précède à titre d'exemple. Il est entendu que l'homme du métier est à même de réaliser différentes variantes de l'architecture électrique 1 selon l'invention, en particulier concernant le nombre de commandes ou l'agencement des différents composants sans pour autant sortir du cadre du brevet.

## Revendications

1. Architecture électrique (1) pour commutateur de véhicule automobile comportant une première commande (C1), une deuxième commande (C2) et une troisième commande (C3), ladite première commande (C1) étant reliée par une première liaison filaire directe (FD1) à une première sortie (S1) d'un microprocesseur (2), ladite deuxième commande (C2) étant reliée par une deuxième liaison filaire directe (FD2) à une deuxième sortie (S2) dudit microprocesseur (2), ladite architecture étant **caractérisée en ce que** ladite troisième commande (C3) est reliée par une première liaison filaire indirecte (FI1) à ladite première sortie (S1) et à ladite deuxième sortie (S2) dudit microprocesseur (2), ladite première liaison filaire indirecte (FI1) comportant une première partie (P1) et une deuxième partie (P2) reliées entre elles au niveau d'un premier noeud électrique (N1), ladite première partie (P1) reliant ladite troisième commande (C3) audit premier noeud électrique (N1), ladite deuxième partie (P2) comportant une première branche (B1) avec une première diode (D1) et une deuxième branche (B2) avec une deuxième diode (D2); ladite première branche (B1) reliant ledit premier noeud électrique (N1) à ladite première sortie (S1) dudit microprocesseur (2) et ladite deuxième branche (B2) reliant ledit premier noeud électrique (N1) à ladite deuxième sortie (S2) dudit microprocesseur (2) ; ladite première diode (D1) respectivement ladite deuxième diode (D2), étant disposées de sorte qu'un courant électrique puisse être transmis de ladite première sortie (S1) vers ladite troisième commande (C3), respectivement de ladite deuxième sortie (S2) vers ladite troisième commande (C3), **en ce qu'**elle comporte :
- une quatrième commande (C4) reliée par une deuxième liaison filaire indirecte (FI2) d'une part, à ladite deuxième sortie (S2) dudit microprocesseur (2) via une troisième diode (D3) et d'autre part, à une troisième sortie (S3) dudit microprocesseur (2) via une quatrième diode (D4), ladite troisième diode (D3) et ladite quatrième diode (D4) étant reliées au niveau d'un deuxième noeud électrique (N2), ladite deuxième liaison filaire indirecte (FI2) comportant un quatrième interrupteur (I4) reliant ladite quatrième commande (C4) au dit deuxième noeud électrique (N2) ;
- une cinquième commande (C5) reliée par une troisième liaison filaire directe (FD3), munie d'un cinquième interrupteur (I5), à ladite troisième sortie (S3) dudit microprocesseur (2) ;
- une sixième commande (C6) reliée par une troisième liaison filaire indirecte (FI3) d'une part, à ladite troisième sortie (S3) dudit microprocesseur (2) via une cinquième diode (D5) et d'autre part, à une quatrième sortie (S4) dudit microprocesseur (2) via une sixième diode (D6), ladite cinquième diode (D5) et ladite sixième diode (D6) étant reliées au niveau d'un troisième noeud électrique (N3), ladite troisième liaison filaire indirecte (FI3) comportant un sixième interrupteur (I6) reliant ladite sixième commande (C6) au dit troisième noeud électrique (N3) ;
- une septième commande (C7) reliée par une quatrième liaison filaire directe (FD4), munie d'un septième interrupteur (I7), à ladite quatrième sortie (S4) dudit microprocesseur (2),
**en ce que** ledit microprocesseur (2) est apte à émettre via ladite première sortie (S1), ladite deuxième sortie (S2), ladite troisième sortie (S3) et ladite quatrième sortie (S4) des impulsions de courant électrique, dont la tension est déterminée, sur ladite première liaison filaire directe (FD1), ladite deuxième liaison filaire directe (FD2), ladite troisième liaison filaire directe (FD3), ladite quatrième liaison filaire directe (FD4), ladite première liaison filaire indirecte (FI1), ladite deuxième liaison filaire indirecte (FI2) et ladite troisième liaison filaire indirecte (FI3), et **en ce qu'**une mesure de ladite tension de chaque impulsion de courant électrique émise sur ladite première liaison filaire directe (FD1), ladite deuxième liaison filaire directe (FD2), ladite troisième liaison filaire directe (FD3), ladite quatrième liaison filaire directe (FD4), ladite première liaison filaire indirecte (FI1), ladite deuxième liaison filaire indirecte (FI2) et/ou ladite troisième liaison filaire indirecte (FI3) est effectuée de façon périodique.

2. Architecture (1) selon la revendication précédente **caractérisée en ce que** ladite première liaison filaire directe (FD1) comporte un premier interrupteur (I1), ladite deuxième liaison filaire directe (FD2) comporte un deuxième interrupteur (I2) et ladite première liaison filaire indirecte (FI1) comporte un troisième interrupteur (I3), ledit troisième interrupteur (I3) étant disposé sur ladite première partie (P1) de ladite première liaison filaire indirecte (FI1).

3. Architecture (1) selon l'une au moins des revendications 1 ou 2, **caractérisée en ce que** ladite tension déterminée de ladite impulsion de courant électrique émise sur :
- ladite première liaison filaire directe (FD1) varie lorsque ledit premier interrupteur (I1) passe d'un état de commutation ouvert à un état de commutation fermé ;
- ladite deuxième liaison filaire directe (FD2) varie lorsque ledit deuxième interrupteur (I2) passe d'un état de commutation ouvert à un état de commutation fermé ;
- ladite troisième liaison filaire directe (FD3) varie lorsque ledit cinquième interrupteur (I5) passe d'un état de commutation ouvert à un état de commutation fermé ;
- ladite quatrième liaison filaire directe (FD4) varie lorsque ledit septième interrupteur (I7) passe d'un état de commutation ouvert à un état de commutation fermé ;
- ladite première liaison filaire indirecte (FI1) varie lorsque ledit troisième interrupteur (I3) passe d'un état de commutation ouvert à un état de commutation fermé ;
- ladite deuxième liaison filaire indirecte (FI2) varie lorsque ledit quatrième interrupteur (I4) passe d'un état de commutation ouvert à un état de commutation fermé ;
- ladite troisième liaison filaire indirecte (FI3) varie lorsque ledit sixième interrupteur (I6) passe d'un état de commutation ouvert à un état de commutation fermé.

4. Architecture (1) selon l'une au moins des revendications 1 à 3, **caractérisée en ce que**, lorsque ladite tension mesurée se situe :
- au delà d'une valeur seuil déterminée, une information est générée pour ledit microprocesseur 2 ;
- en deçà de ladite valeur seuil déterminée, une information est générée pour ledit microprocesseur 2.

5. Architecture (1) selon la revendication 4 **caractérisée en ce que** ladite information est une information numérique ou une information analogique.

6. Architecture (1) selon l'une des revendications 4 ou 5 **caractérisée en ce que** ledit microprocesseur (2) est apte à recevoir une information relative à un état de commutation de chacun desdits premier interrupteur (I1), deuxième interrupteur (I2), troisième interrupteur (I3), quatrième interrupteur (I4), cinquième interrupteur (I5), sixième interrupteur (I6), et/ou septième interrupteur (I7), lesdites informations étant combinées entre elles de façon à obtenir une table d'information.

7. Commutateur sous volant de véhicule automobile **caractérisé en ce que** ledit commutateur comporte une architecture électrique (1) selon l'une au moins des revendications 1 à 6.

## Patentansprüche

1. Elektrische Architektur (1) für einen Kraftfahrzeugschalter, welche ein erstes Bedienelement (C1), ein zweites Bedienelement (C2) und ein drittes Bedienelement (C3) aufweist, wobei das erste Bedienelement (C1) über eine erste direkte Drahtverbindung (FD1) mit einem ersten Ausgang (S1) eines Mikroprozessors (2) verbunden ist, wobei das zweite Bedienelement (C2) über eine zweite direkte Drahtverbindung (FD2) mit einem zweiten Ausgang (S2) des Mikroprozessors (2) verbunden ist, wobei die Architektur **dadurch gekennzeichnet ist, dass** das dritte Bedienelement (C3) über eine erste indirekte Drahtverbindung (FI1) mit dem ersten Ausgang (S1) und mit dem zweiten Ausgang (S2) des Mikroprozessors (2) verbunden ist, wobei die erste indirekte Drahtverbindung (FI1) einen ersten Teil (P1) und einen zweiten Teil (P2) aufweist, die an einem ersten elektrischen Knoten (N1) miteinander verbunden sind, wobei der erste Teil (P1) das dritte Bedienelement (C3) mit dem ersten elektrischen Knoten (N1) verbindet, wobei der zweite Teil (P2) einen ersten Zweig (B1) mit einer ersten Diode (D1) und einen zweiten Zweig (B2) mit einer zweiten Diode (D2) aufweist; wobei der erste Zweig (B1) den ersten elektrischen Knoten (N1) mit dem ersten Ausgang (S1) des Mikroprozessors (2) verbindet und der zweite Zweig (B2) den ersten elektrischen Knoten (N1) mit dem zweiten Ausgang (S2) des Mikroprozessors (2) verbindet; wobei die erste Diode (D1) bzw. die zweite Diode (D2) derart angeordnet ist, dass ein elektrischer Strom vom ersten Ausgang (S1) zum dritten Bedienelement (C3) bzw. vom zweiten Ausgang (S2) zum dritten Bedienelement (C3) übertragen werden kann; dadurch, dass sie aufweist:
- ein viertes Bedienelement (C4), das über eine zweite indirekte Drahtverbindung (FI2) einerseits mit dem zweiten Ausgang (S2) des Mikroprozessors (2) über eine dritte Diode (D3) und andererseits mit einem dritten Ausgang (S3) des Mikroprozessors (2) über eine vierte Diode (D4) verbunden ist, wobei die dritte Diode (D3) und die vierte Diode (D4) an einem zweiten elektrischen Knoten (N2) verbunden sind, wobei die zweite indirekte Drahtverbindung (FI2) einen vierten Schalter (I4) aufweist, der das vierte Bedienelement (C4) mit dem zweiten elektrischen Knoten (N2) verbindet;
- ein fünftes Bedienelement (C5), das über eine dritte direkte Drahtverbindung (FD3), die mit einem fünften Schalter (I5) ausgestattet ist, mit dem dritten Ausgang (S3) des Mikroprozessors (2) verbunden ist;
- ein sechstes Bedienelement (C6), das über eine dritte indirekte Drahtverbindung (FI3) einerseits mit dem dritten Ausgang (S3) des Mikroprozessors (2) über eine fünfte Diode (D5) und andererseits mit einem vierten Ausgang (S4) des Mikroprozessors (2) über eine sechste Diode (D6) verbunden ist, wobei die fünfte Diode (D5) und die sechste Diode (D6) an einem dritten elektrischen Knoten (N3) verbunden sind, wobei die dritte indirekte Drahtverbindung (FI3) einen sechsten Schalter (I6) aufweist, der das sechste Bedienelement (C6) mit dem dritten elektrischen Knoten (N3) verbindet;
- ein siebentes Bedienelement (C7), das über eine vierte direkte Drahtverbindung (FD4), die mit einem siebenten Schalter (I7) ausgestattet ist, mit dem vierten Ausgang (S4) des Mikroprozessors (2) verbunden ist,
dadurch, dass der Mikroprozessor (2) geeignet ist, über den ersten Ausgang (S1), den zweiten Ausgang (S2), den dritten Ausgang (S3) und den vierten Ausgang (S4) Impulse von elektrischem Strom, deren Spannung bestimmt wird, auf der ersten direkten Drahtverbindung (FD1), der zweiten direkten Drahtverbindung (FD2), der dritten direkten Drahtverbindung (FD3), der vierten direkten Drahtverbindung (FD4), der ersten indirekten Drahtverbindung (FI1), der zweiten indirekten Drahtverbindung (FI2) und der dritten indirekten Drahtverbindung (FI3) auszugeben, und dadurch, dass eine Messung dieser Spannung jedes Impulses von elektrischem Strom, der auf der ersten direkten Drahtverbindung (FD1), der zweiten direkten Drahtverbindung (FD2), der dritten direkten Drahtverbindung (FD3), der vierten direkten Drahtverbindung (FD4), der ersten indirekten Drahtverbindung (FI1), der zweiten indirekten Drahtverbindung (FI2) und/oder der dritten indirekten Drahtverbindung (FI3) ausgegeben wird, periodisch durchgeführt wird.

2. Architektur (1) nach dem vorhergehenden Anspruch, **dadurch gekennzeichnet, dass** die erste direkte Drahtverbindung (FD1) einen ersten Schalter (I1) aufweist, die zweite direkte Drahtverbindung (FD2) einen zweiten Schalter (I2) aufweist und die erste indirekte Drahtverbindung (FI1) einen dritten Schalter (I3) aufweist, wobei der dritte Schalter (I3) auf dem ersten Teil (P1) der ersten indirekten Drahtverbindung (FI1) angeordnet ist.

3. Architektur (1) nach wenigstens einem der Ansprüche 1 oder 2, **dadurch gekennzeichnet, dass** die bestimmte Spannung des Impulses von elektrischem Strom, der
- auf der ersten direkten Drahtverbindung (FD1) ausgegeben wird, sich ändert, wenn der erste Schalter (I1) von einem offenen Schaltzustand in einen geschlossenen Schaltzustand übergeht;
- auf der zweiten direkten Drahtverbindung (FD2) ausgegeben wird, sich ändert, wenn der zweite Schalter (I2) von einem offenen Schaltzustand in einen geschlossenen Schaltzustand übergeht;
- auf der dritten direkten Drahtverbindung (FD3) ausgegeben wird, sich ändert, wenn der fünfte Schalter (I5) von einem offenen Schaltzustand in einen geschlossenen Schaltzustand übergeht;
- auf der vierten direkten Drahtverbindung (FD4) ausgegeben wird, sich ändert, wenn der siebente Schalter (I7) von einem offenen Schaltzustand in einen geschlossenen Schaltzustand übergeht;
- auf der ersten indirekten Drahtverbindung (FI1) ausgegeben wird, sich ändert, wenn der dritte Schalter (I3) von einem offenen Schaltzustand in einen geschlossenen Schaltzustand übergeht;
- auf der zweiten indirekten Drahtverbindung (FI2) ausgegeben wird, sich ändert, wenn der vierte Schalter (I4) von einem offenen Schaltzustand in einen geschlossenen Schaltzustand übergeht;
- auf der dritten indirekten Drahtverbindung (FI3) ausgegeben wird, sich ändert, wenn der sechste Schalter (I6) von einem offenen Schaltzustand in einen geschlossenen Schaltzustand übergeht.

4. Architektur (1) nach wenigstens einem der Ansprüche 1 bis 3, **dadurch gekennzeichnet, dass**, wenn die gemessene Spannung
- oberhalb eines bestimmten Schwellenwertes liegt, eine Information für den Mikroprozessor (2) erzeugt wird;
- unterhalb dieses Schwellenwertes liegt, eine Information für den Mikroprozessor (2) erzeugt wird.

5. Architektur (1) nach Anspruch 4, **dadurch gekennzeichnet, dass** die Information eine digitale Information oder eine analoge Information ist.

6. Architektur (1) nach einem der Ansprüche 4 oder 5, **dadurch gekennzeichnet, dass** der Mikroprozessor (2) geeignet ist, eine Information zu empfangen, die sich auf einen Schaltzustand jedes von dem ersten Schalter (I1), zweiten Schalter (I2), dritten Schalter (I3), vierten Schalter (I4), fünften Schalter (I5), sechsten Schalter (I6) und/oder siebenten Schalter (I7) bezieht, wobei diese Informationen derart miteinander kombiniert sind, dass eine Informationstabelle erhalten wird.

7. Umschalter unter einem Kraftfahrzeuglenkrad, **dadurch gekennzeichnet, dass** der Umschalter eine elektrische Architektur (1) nach wenigstens einem der Ansprüche 1 bis 6 aufweist.

## Claims

1. Electrical architecture (1) for a motor vehicle switch having a first control (C1), a second control (C2) and a third control (C3), said first control (C1) being connected by a first direct wire link (FD1) to a first output (S1) of a microprocessor (2), said second control (C2) being connected by a second direct wire link (FD2) to a second output (S2) of said microprocessor (2), said architecture being **characterized in that** said third control (C3) is connected by a first indirect wire link (FI1) to said first output (S1) and to said second output (S2) of said microprocessor (2), said first indirect wire link (FI1) comprising a first part (P1) and a second part (P2) interconnected at a first electrical node (N1), said first part (P1) connecting said third control (C3) to said first electrical node (N1), said second part (P2) having a first branch (B1) with a first diode (D1) and a second branch (B2) with a second diode (D2); said first branch (B1) connecting said first electrical node (N1) to said first output (S1) of said microprocessor (2) and said second branch (B2) connecting said first electrical node (N1) to said second output (S2) of said microprocessor (2); said first diode (D1) and said second diode (D2) being arranged in such a way that an electric current can be transmitted, respectively, from said first output (S1) toward said third control (C3) and from said second output (S2) toward said third control (C3), **in that** it includes:
- a fourth control (C4) connected by a second indirect wire link (FI2), on the one hand, to said second output (S2) of said microprocessor (2) via a third diode (D3), and, on the other hand, to a third output (S3) of said microprocessor (2) via a fourth diode (D4), said third diode (D3) and said fourth diode (D4) being connected at a second electrical node (N2), said second indirect wire link (FI2) including a fourth on-off switch (14) connecting said fourth control (C4) to said second electrical node (N2);
- a fifth control (C5) connected by a third direct wire link (FD3), provided with a fifth on-off switch (I5), to said third output (S3) of said microprocessor (2);
- a sixth control (C6) connected by a third indirect wire link (FI3), on the one hand, to said third output (S3) of said microprocessor (2) via a fifth diode (D5), and, on the other hand, to a fourth output (S4) of said microprocessor (2) via a sixth diode (D6), said fifth diode (D5) and said sixth diode (D6) being connected at a third electrical node (N3), said third indirect wire link (FI3) including a sixth on-off switch (16) connecting said sixth control (C6) to said third electrical node (N3);
- a seventh control (C7) connected by a fourth direct wire link (FD4), provided with a seventh on-off switch (17), to said fourth output (S4) of said microprocessor (2),
- **in that** said microprocessor (2) is adapted to send via said first output (S1), said second output (S2), said third output (S3) and said fourth output (S4) pulses of electric current whose voltage is determined, along said first direct wire link (FD1), said second direct wire link (FD2), said third direct wire link (FD3), said fourth direct wire link (FD4), said first indirect wire link (FI1), said second indirect wire link (FI2) and said third indirect wire link (FI3), and **in that** a periodic measurement is made of said voltage of each pulse of electric current sent along said first direct wire link (FD1), said second direct wire link (FD2), said third direct wire link (FD3), said fourth direct wire link (FD4), said first indirect wire link (FI1), said second indirect wire link (FI2) and/or said third indirect wire link (FI3).

2. Architecture (1) according to the preceding claim, **characterized in that** said first direct wire link (FD1) has a first on-off switch (I1), said second direct wire link (FD2) has a second on-off switch (12), and said first indirect wire link (FI1) has a third on-off switch (13), said third on-off switch (13) being positioned in said first part (P1) of said first indirect wire link (FI1).

3. Architecture (1) according to at least one of Claims 1 and 2, **characterized in that** said determined voltage of said pulse of electric current sent along:
- said first direct wire link (FD1) varies when said first on-off switch (I1) changes from an open switching state to a closed switching state;
- said second direct wire link (FD2) varies when said second on-off switch (12) changes from an open switching state to a closed switching state;
- said third direct wire link (FD3) varies when said fifth on-off switch (I5) changes from an open switching state to a closed switching state;
- said fourth direct wire link (FD4) varies when said seventh on-off switch (17) changes from an open switching state to a closed switching state;
- said first indirect wire link (FI1) varies when said third on-off switch (13) changes from an open switching state to a closed switching state;
- said second indirect wire link (FI2) varies when said fourth on-off switch (14) changes from an open switching state to a closed switching state;
- said third indirect wire link (FI3) varies when said sixth on-off switch (16) changes from an open switching state to a closed switching state.

4. Architecture (1) according to at least one of Claims 1 to 3, **characterized in that**, when said measured voltage is:
- above a specified threshold value, a data element is generated for said microprocessor 2;
- below a specified threshold value, a data element is generated for said microprocessor 2.

5. Architecture (1) according to Claim 4, **characterized in that** said data element is a numeric or analog data element.

6. Architecture (1) according to either of Claims 4 and 5, **characterized in that** said microprocessor (2) is adapted to receive a data element relating to a switching state of each of said first on-off switch (I1), second on-off switch (12), third on-off switch (13), fourth on-off switch (14), fifth on-off switch (I5), sixth on-off switch (16), and/or seventh on-off switch (17), said data elements being combined with each other for the purpose of drawing up a data table.

7. Steering column switch for a motor vehicle, **characterized in that** said switch includes an electrical architecture (1) according to at least one of Claims 1 to 6.
